# EUROPEAN PATENT APPLICATION

(11) **EP 1 017 152 A2**
(43) Date of publication of application: **05.07.2000**
(21) Application number: 99204366.1
(22) Date of filing: 17.12.1999
(51) Int. Cl.: H02K 1/27

(54) **Rotor for high speed permanent magnet motor**

(30) Priority: 30.12.1998 IT MI982861
(71) Applicant: ABB Research Ltd., 8050 Zürich (CH)
(72) Inventor: Antoniazzi, Antonello, 20125 Milano (IT); Moriconi, Franco, 20097 San Donato Milanese (Mi) (IT); Pacinotti, Marco, 20136 Milano (IT); Secondo, Giulio, 16122 Genova (IT)
(74) Representative: Giavarini, Francesco

(57) **Abstract**

A rotor for a permanent-magnet motor, comprising a supporting frame adapted to form spaces for accommodating a plurality of magnets, the frame being rigidly coupled to the motor shaft of the rotor, the supporting frame being adapted to prevent traction stresses on the magnets accommodated therein caused by the generation of centrifugal forces due to the rotation of the rotor.

## Description

The present invention relates to a rotor for a permanent-magnet motor. More particularly, the invention relates to a rotor for high-speed permanent-magnet motors of the axial-flux and radial-flux types.

It is known that in high-speed applications the rotor of a permanent-magnet electric motor is subject to mechanical problems due to the intense stresses to which the permanent magnets are subjected.

In a permanent-magnet motor meant to run at high speed, one of the main problems is to provide the permanent magnets with a precompression in order to keep them subjected to a compression force even when the rotor is turning at the maximum possible speed. Permanent magnets in fact have a satisfactory mechanical behavior only when subjected to compression, since they are made of sintered materials.

If the magnets were instead subjected to traction forces, such as those that occur when the rotor is turning at high speed and centrifugal forces are generated, said permanent magnets might be damaged.

Accordingly, different solutions are commonly adopted in order to maintain a compression force on the magnets. Said solutions mainly consist in providing a retaining ring arranged around the magnets and made of materials with high mechanical strength, such as steel, a fiber-reinforced banding material or other high-strength materials such as titanium or zirconium alloys.

The retaining ring is placed around the permanent magnets by heating the ring, placing it in position and then cooling so that it tightens around the magnets.

It is evident that such a solution entails considerable assembly costs, in addition to the fact that for rotors operating at very high speeds it is not possible to provide a precompression force adapted to keep the magnets compressed when the rotor is rotating at the maximum possible speed.

The precompression value that must be provided to the magnets in fact exceeds the force that the materials that constitute the retaining rings can withstand without being damaged. Furthermore, conventional permanent magnet-motors are affected by a further drawback, due to the fact that at high speeds the magnets overheat, causing degradation in their magnetic properties, especially when using permanent magnets of the NdFeB (neodymium-iron-boron) type.

The aim of the present invention is to provide a rotor for a high-speed permanent-magnet motor which allows to avoid the need for a device for precompressing the permanent magnets despite avoiding radial expansions of said magnets when the rotor turns at high speeds which are detrimental to the mechanical behavior of the magnets.

Within the scope of this aim, an object of the present invention is to provide a rotor for high-speed permanent-magnet motors which is lightweight and simple to provide.

Another object of the present invention is to provide a rotor for a permanent-magnet motor which is particularly strong and requires a simple magnet shape and an equally simple magnetization process.

Another object of the present invention is to provide a rotor for a permanent-magnet motor in which the heat generated in the rotor during rotation can he easily extracted, accordingly improving the magnetic performance of the magnets.

Another object of the present invention is to provide a rotor for a permanent-magnet motor. which is highly reliable, relatively easy to manufacture and at competitive costs.

Thus the present invention provides rotor for a permanent-magnet motor, comprising a supporting frame for accommodating a plurality of magnets, said supporting frame being rigidly coupled to the shaft of said rotor and preventing said magnets accommodated therein from traction stresses, caused by the generation of centrifugal forces due to the rotation of said rotor.

Further characteristics and advantages of the present invention will become apparent from the following detailed description of preferred but not exclusive embodiments of the rotor according to the invention, illustrated only by way of non-limitative example in the accompanying drawings, wherein:
Figure 1 is a partial schematic sectional view of a first embodiment of the rotor according to the present invention;
Figure 2 is an exploded perspective view of a portion of the rotor of Figure 1;
Figure 3 is a schematic sectional view of a second embodiment of the rotor according to the present invention;
Figure 4 is a schematic sectional view of a third embodiment of the rotor according to the present invention;
Figure 5 is a partial sectional view of a variation of the third embodiment shown in Figure 4; and
Figure 6 is a front view of the rotor according to the invention, illustrating an additional constructive characteristic.

With reference to the above figures, the rotor according to the present invention comprises a supporting frame 1 for the permanent magnets 12 which is rigidly coupled to the shaft 5 of the rotor and allows the magnets 12 to work so as to be subjected only to compression forces, since they are not directly connected to the shaft 5. The magnets instead make contact with suitable inserts 11 which are inserted within the supporting frame 1. The inserts 11 transmit the torque to the supporting frame 1 and from there to the shaft 5.

In practice, the inserts 11 can be made of substantially incompressible materials but can elongate or extend in the tangential direction, accordingly allowing to keep the magnets 12 compressed even when the rotor is rotating at high speeds. In the embodiments that will be described hereinafter, the supporting frame 1 can be made with material having high mechanical resistance (for example titanium, titanium alloys, zirconium, zirconium alloys and the like) and can be realized using laser welding processes.

Moreover the shaft of the rotor can be provided with a central hole for removing at least part of the heat generated during the rotation of the rotor.

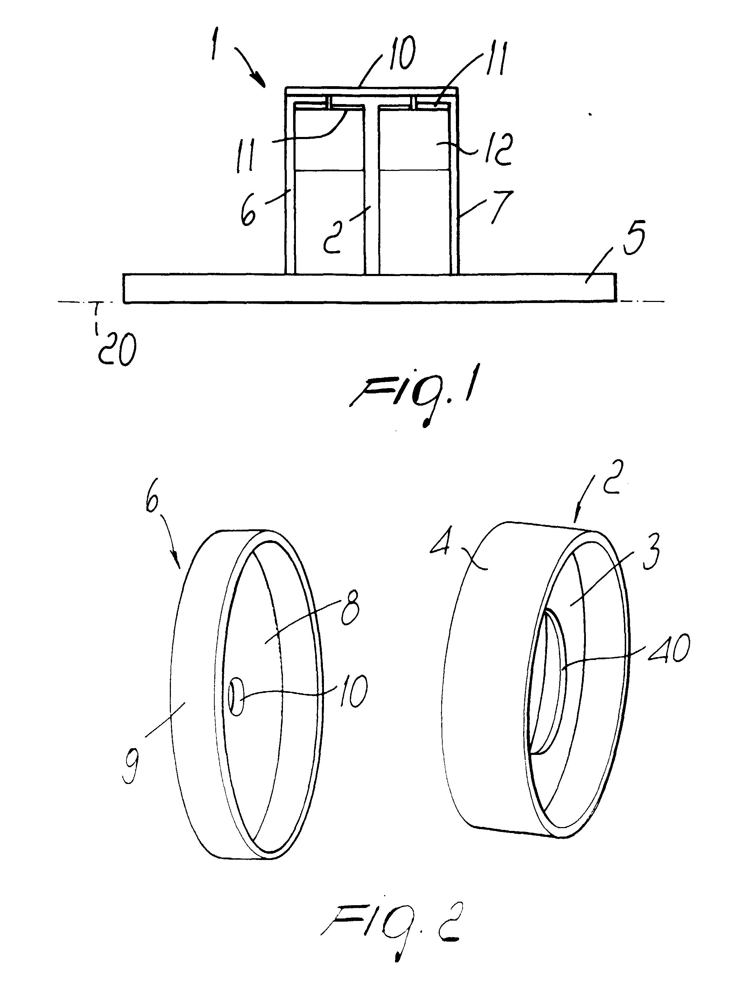

In detail, as shown in the various figures, the supporting frame for the magnets can have different configurations. Figure 1 illustrates a first embodiment, in which said supporting frame 1 comprises a central cylindrical shell 2 which comprises a radial wall 3 and an outer wall 4 which is arranged circumferentially around said radial wall 3. The radial wall 3 can be provided with a central hole 40 for the passage of the shaft 5 of the rotor and the central shell 4 can be therefore rigidly coupled to the shaft 5.

Two lateral shells 6 and 7 are respectively arranged adjacent to the central shell 4 and they can comprise a radial wall 8. The radial wall 8 can preferably be similar to the radial wall 3 in terms of dimensions and is surrounded by an outer wall 9, arranged circumferentially around the radial wall 8.

like the central shell 2, the radial wall 8 has a hole 10 for the passage of the shaft 5 of the rotor.

The central shell 2 and the respective lateral shells 6 and 7 adjacent thereto are connected by a handing layer 10.

The number of central shells 2 can vary according to the length of the rotor.

The inserts 11, made of substantially incompressible material. can he arranged inside the outer wall 4 of the central shell 2 and of the lateral shells 6 and 7. The shells 2, 6 and 7 form spaces for accommodating permanent magnets 12 which, for example, can be glued to the inserts 11.

The inserts 11 are made, as mentioned, of anisotropic material and are such that they are substantially incompressible but can elongate in the tangential direction. The modulus of elasticity of the inserts 11 in the tangential direction is such that the torque applied to the permanent magnets 12 can be transmitted to the central shell 2 and to the lateral shells 6 and 7 and from there to the shaft 5 of the rotor.

As an alternative, the inserts 11 can again be of substantially incompressible material but with an extremely low friction coefficient, in order to allow the permanent magnets, as in the preceding case, to undergo a substantial and different elongation in a tangential direction with respect to the elongation of the containment structure and ultimately a reduction or elimination of traction stress.

In this second case, the driving torque is substantially transmitted to the shaft by means of two wedges 13 described in detail hereinafter.

In addition to this, as shown in Figure 6, the permanent magnets 12, which can be appropriately segmented into a plurality of magnets in order to facilitate their construction and magnetization, transmit the torque to the shaft 5 by means of a dividing wedge 13, which runs through the entire shaft and has a second function for aligning the different poles of the rotor. The angle between one north pole and one south pole not covered by permanent magnets, in which the wedge 13 is inserted, can vary between approximately 0 and 15° in order to allow optimum performance.

Figure 6 also shows the magnetization axes of the various magnets 12, designated by arrows 14. Figure 6 illustrates the case of a radial-flux permanent-magnet motor. If the motor were of the axial-flux type, the magnetization direction would be perpendicular to the transverse cross-section of the motor.

Therefore, in the case of Figure 6 the magnetization axis 14 is in the radial direction, i.e., each one of the permanent-magnet segments 12 is magnetized in a direction which is parallel to the radius of the segment or parallel to the median radius of said segment.

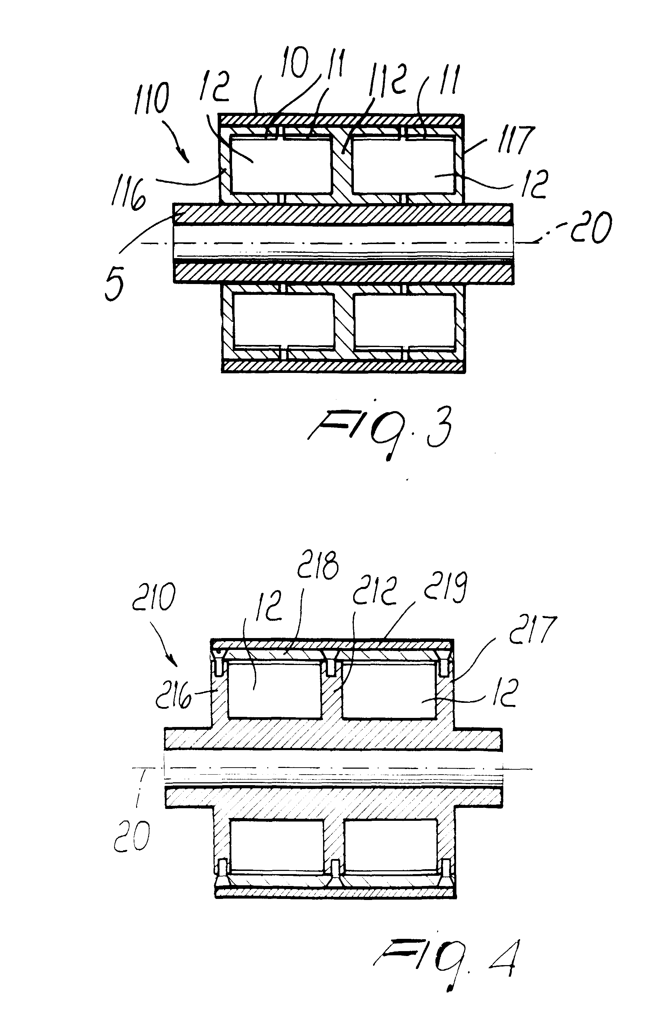

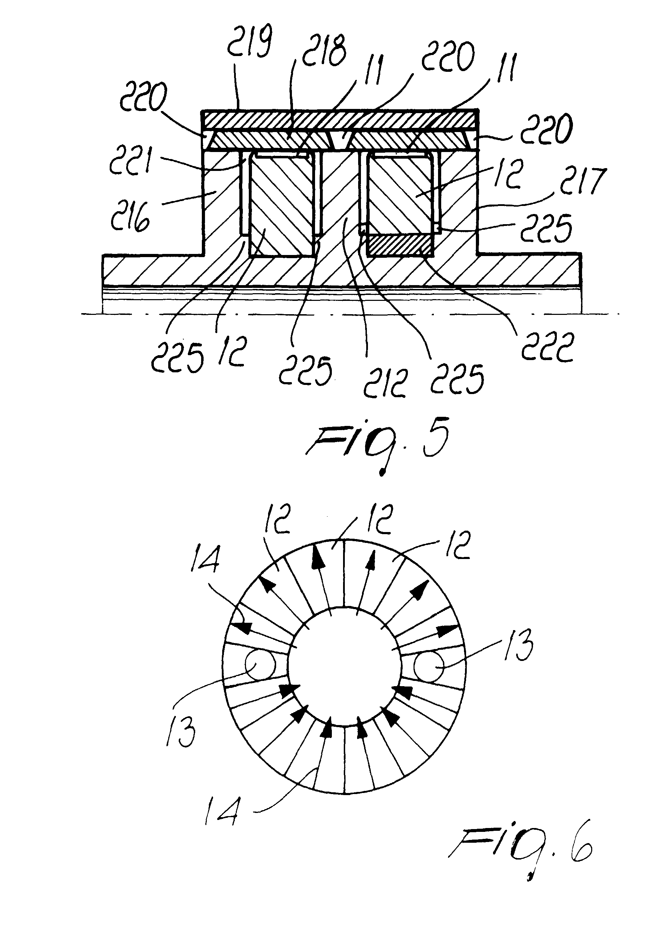

Figure 3 illustrates a second embodiment of the rotor according to the invention, designated by the reference numeral 110 in this case, in which the central shell, designated by the reference numeral 112, has an H-shaped transverse cross-section, whereas the lateral shells 116 and 117 respectively have a C-shaped transverse cross-section.

Figure 4 is a view of a third embodiment of the rotor according to the invention, generally designated by the reference numeral 210, in which the supporting frame is provided in this case by a single cylindrical structure which comprises a plurality of walls. Preferably, three walls can be comprised: two lateral ones 216 and 217 and an inner one 212, which form the spaces for accommodating the magnets 12. It should be noticed that identical reference numerals designate identical elements in all the figures.

The above-described cylindrical structure comprises a banding layer 218 which is fixed by means of screws to the walls 216, 217 and 212 and on which there is a further external handing layer 219.

In a constructive variation shown in Figure 5, the internal banding layer 218 can be welded by means of spot welds 220 to the walls 216, 217 and 212. Without reducing generality, the spot welds 220 may also be located elsewhere, for example along the walls 212, 216, 217 and along the wall 218, particularly in the points subjected to less mechanical stress. In this case also, there are inserts 11 made of elastic or low-friction material, against which the permanent magnets 12 are arranged. As shown in Figure 5, air gaps 221 are formed between the magnets 12 and the side walls of the magnet supporting frame. In this manner, cooling during the welding of the internal handing layer 218 is facilitated.

It the rotor is made of nonmagnetic material, second ferromagnetic inserts 222, having predictably a ring shape, can be used in order to provide a low-reluctance magnetic circuit. If the motor is of the radial-flux type, the structure must be made of non magnetic material in order to avoid a short-circuit of the magnetic flux and therefore said second ferromagnetic inserts 222 become necessary.

As mentioned above, in order to remove the heat generated during the rotation of the rotor, the shaft 5 of the motor can be conveniently provided with a central hole 20 provided in order to dissipate the heat generated during operation.

The banding layer 218 can, in addition to being screwed as shown in Figure 4, either be welded as shown in Figure 5 or even glued.

An outer banding layer 219 can be provided in order to reinforce the structure of the rotor, and in this manner it is possible to use magnetic steel for the rotor core, i.e., for the radial walls 2, 112, and 212.

Figure 5 is a sectional view illustrating the presence of teeth 225 which are used both to axially position the magnets 12 and to position the inserts made of ferromagnetic material 222.

As mentioned, the magnets are segmented into a plurality of segments in order to simplify their construction and magnetization.

In practice it has been observed that the rotor according to the invention fully achieves the intended aims. The supporting frame provided in order to accommodate the magnets allows to avoid an expansion of said magnets due to the centrifugal forces to which the magnets are subjected when the rotor turns at high speed. At the same time it allows to provide a rotor which is both lightweight and simplified in its structure.

It is in fact not necessary to provide retaining rings adapted to apply pre-compression to the magnets, so as to make them always work under compression, a condition in which they have optimum mechanical behavior.

The magnet supporting frame merely allows to prevent their expansion in a radial direction when the rotor turns at high speed without however requiring their pre-compression. Further, the assembly of the supporting frame is highly simplified with respect to the retaining ring that is currently used, since said ring must be installed after heating, so that once it has cooled it can shrink and block the magnets in a pre-compressed configuration.

The different embodiments shown provide different construction solutions for the supporting frame without however modifying the inventive concept underlying the present invention. The segmentation of the magnets into a plurality of segments furthermore facilitates both their production and their magnetization.

The rotor thus conceived is susceptible of numerous modifications and variations, all of which are within the scope of the inventive concept. All the details may also be replaced with other technically equivalent elements.

In practice, the materials employed, so long as they are compatible with the specific use, as well as the dimensions, may be any according to the requirements and to the state of the art.

## Claims

1. A rotor for a permanent-magnet motor, comprising a supporting frame for accommodating a plurality of magnets, said supporting frame being rigidly coupled to the shaft of said rotor and preventing said magnets accommodated therein from traction stresses, caused by the generation of centrifugal forces due to the rotation of said rotor.

2. The rotor according to claim 1, characterized in that said supporting frame comprises at least one central shell and two lateral shells adjacent thereto, said shells forming spaces for accommodating said permanent magnets.

3. The rotor according to claim 2, characterized in that said central shell comprises a cylindrical element provided with a radial wall and with an outer wall arranged circumferentially around said radial wall.

4. The rotor according to claim 2, characterized in that said lateral shells comprises a radial wall and with an outer wall arranged circumferentially around said radial wall.

5. The rotor according to claim 2, characterized in that said central shell and said lateral shells have a central hole for the passage of the shaft of said rotor.

6. The rotor according to claim 2, characterized in that said central shell has an H-shaped transverse cross-section.

7. The rotor according to claim 2, characterized in that said lateral shells have a C-shaped transverse cross-section.

8. The rotor according to one or more of the preceding claims, characterized in that said central shell and said lateral shells arc mutually connected by means of at least one handing layer.

9. The rotor according to claim 3 or 4, characterized in that said outer wall of said shells is internally provided with inserts made of substantially incompressible low-friction material to which said permanent magnets are meant to be glued.

10. The rotor according to claim 1, characterized in that said supporting frame comprises a single cylindrical structure, rigidly coupled to said shaft, which comprises a plurality of walls, so as to form spaces for accommodating said permanent magnets.

11. The rotor according to one or more of the preceding claims, characterized in that said structure comprises an internal banding layer.

12. The rotor according to one or more of the preceding claims, characterized in that said structure comprises an external banding layer, adapted to reinforce the structure of the rotor.

13. The rotor according to claim 11, characterized in that said internal banding layer is screwed to said walls.

14. The rotor according to claim 11, characterized in that said internal banding layer is welded to said supporting frame.

15. The rotor according to claim 11, characterized in that said internal banding layer is glued to said supporting frame.

16. The rotor according to one or more of the preceding claims, characterized in that it comprises on or more second inserts, made of ferromagnetic material, that are positioned around the shaft of said rotor, so as to ensure a closed path to the lines of the magnetic field generated by said permanent magnets.

17. The rotor according to one or more of the preceding claims, characterized in that the spaces for accommodating said permanent magnets formed in said supporting frame present, at shaft of the rotor, positioning teeth for said permanent magnets.

18. The rotor according to one or more of the preceding claims, characterized in that said permanent magnets are segmented into a plurality of segments between which at least two wedges are arranged, said wedges running axially along the rotor and compacting said segments.

19. The rotor according to claim 1, characterized in that the shaft of said rotor is provided with a central hole for removing at least part of the heat generated during the rotation of said rotor.

20. The rotor according to claim 1, characterized in that said supporting frame is realized with materials having high mechanical resistance.

21. The rotor according to claim 1, characterized in that said supporting frame is realized using laser welding processes.

22. A permanent magnet motor, characterized by the fact of comprising a rotor according to one or more of the previous claims.
